(19) Europäisches Patentamt
European Patent Office
Office européen des brevets

(11) Publication number: 0 601 546 A2

# (12) EUROPEAN PATENT APPLICATION

(21) Application number: 93119707.3

(22) Date of filing: 07.12.93

(51) Int. Cl.[5]: C08L 71/12, C08L 77/00, C08K 5/524

(30) Priority: 07.12.92 JP 326397/92
17.06.93 JP 146277/93

(43) Date of publication of application:
15.06.94 Bulletin 94/24

(84) Designated Contracting States:
DE FR GB IT NL

(71) Applicant: MITSUBISHI PETROCHEMICAL COMPANY LIMITED
2-5, Marunouchi 2-chome
Chiyoda-ku Tokyo-to(JP)

(72) Inventor: Nishimura, Hiromi, c/o Yokkaichi Research Center
Mitsubishi Petrochem. Co., Ltd.,
1, Toho-cho
Yokkaichi-shi, Mie-ken(JP)
Inventor: Tsukahara, Toru, c/o Yokkaichi Research Center
Mitsubishi Petrochem. Co., Ltd.,
1, Toho-cho
Yokkaichi-shi, Mie-ken(JP)
Inventor: Arashiro, Yusuke, c/o Yokkaichi Research Center
Mitsubishi Petrochem. Co., Ltd.,
1, Toho-cho
Yokkaichi-shi, Mie-ken(JP)
Inventor: Aritomi, Mitsutoshi, c/o Yokkaichi Research Center
Mitsubishi Petrochem. Co., Ltd.,
1, Toho-cho
Yokkaichi-shi, Mie-ken(JP)

(74) Representative: Hansen, Bernd, Dr. Dipl.-Chem. et al
Hoffmann, Eitle & Partner,
Patentanwälte,
Arabellastrasse 4
D-81925 München (DE)

## (54) Thermoplastic resin composition and process for preparing the same.

(57) There are disclosed a thermoplastic resin composition comprising
(A) 10 to 90 % by weight of a polyphenylene ether,
(B) 90 to 10 % by weight of a polyamide,
(C) 0.1 to 10 parts by weight of a phosphorous acid ester represented by the formula (I) or (II) mentioned in the specification, based on 100 parts by weight of Components (A) and (B) in total, and
(D) 0 to 100 parts by weight of an impact modifier based on 100 parts by weight of Components (A) and (B) in total,
and a process for preparing the thermoplastic resin composition comprising preliminarily melting and kneading Components (A), (B) and (C), or Components (A) and (C); adding Component (D), or Components (B) and (D) to the preliminary mixture; and further melting and kneading the mixture.

EP 0 601 546 A2

## BACKGROUND OF THE INVENTION

The present invention relates to a thermoplastic composition having an excellent mechanical strength which comprises a polyphenylene ether (hereinafter abbreviated as "PPE"), a polyamide, a specific phosphite ester and an impact modifier, and a process for preparing the same. The composition is excellent in solvent resistance and heat-resistant stiffness and is an engineering plastic useful as materials for industrial uses such as those for automobile parts and those for electronic parts.

A PPE has been used as an engineering plastic having excellent heat resistance, dimensional stability, nonhygroscopicity, and electric properties. It has, however, disadvantages that it is difficult to carry out a molding processing such as injection molding and extrusion molding using this because of low melt fluidity, and molded products thereof have defects that solvent resistance and impact resistance are low.

On the other hand, a polyamide has been used as one of representative engineering plastics having excellent heat resistance, solvent resistance and molding processability. The polyamide has, however, disadvantages that it has insufficient dimensional stability, hygroscopicity, resistance to heat distortion, and impact resistance, and therefore, uses thereof have been limited.

Therefore, if a composition which has desirable advantages both of PPEs' and polyamides' and compensates disadvantages thereof with each other is developed, it will become possible to provide an excellent resin material which can be used in various fields, and the development of such materials will be industrially significant.

For the above reasons, various compositions have been proposed in order to provide a molding material in which the above two components are mixed so as to compensates disadvantages thereof without losing advantages thereof. For example, compositions wherein a PPE is simply mixed with a polyamide are disclosed in Japanese Patent Publication No. 997/1970 and No. 41663/1984. However, both resin compositions substantially have a relatively poor compatibility, and are finely dispersed with difficulty, failing to provide desirable mechanical properties.

Japanese Provisional Patent Publication No. 26913/1981 discloses a process for improving the compatibility by incorporating into the composition a compound which has, in the molecule thereof, a carbon-carbon double bond and a carboxyl group, an acid anhydride, an acid amide, an imide group, a carboxylic acid ester, an epoxy group, an amino group or a hydroxyl group. The above publication employs these various compounds as a modifier of PPE and is to improve the mechanical properties by causing a graft reaction between the PPE and the polyamide. The above publication also discloses an addition of a rubber-like polymer, a rubber-modified styrene resin for improvement of the impact resistance.

Japanese Provisional Patent Publication No. 296061/1986 discloses a composition in which an oxidized olefin wax and a phosphorous acid ester are mixed with a mixture of a PPE and a polyamide in order to improve mechanical strength. This is to improve mechanical strength by using the oxidized olefin wax and the optionally existing phosphorous acid ester in some cases as coupling agents, and a graft reaction is caused between the PPE and the polyamide. Thus, the graft-reaction has been essential for improvement of the compatibility between the conventional polyamide and PPE, and for which, a third component is added whereby the mechanical properties are to be improved.

U.S. Patent No. 4,433,116 discloses a process for increasing the relative viscosity of a polycaprolactam by using a phosphorous acid ester compound, but the objects of this patent are merely to lower the melt index of a polyamide and to increase the viscosity of the same. Japanese Provisional Patent Publication No. 208324/1983 discloses a process for preparing a graft and/or block polymer from a polyamide and a polyester by using a phosphorous acid ester. However, this publication has no statement that a PPE is reacted.

## SUMMARY OF THE INVENTION

The present invention is to provide a novel thermoplastic resin composition excellent in mechanical strength, heat resistant rigidity, solvent resistance and appearance of a molded product by improving compatibility between a PPE and a polyamide.

The present inventors have intensively studied to achieve the above objects, and found that a thermoplastic resin composition having desirable properties can be obtained by, when a mixture comprising a PPE, a polyamide, a specific phosphorous acid ester and an impact modifier is melted and kneaded, preliminarily melting and kneading the PPE, the polyamide and the impact modifier, or the PPE and the impact modifier, followed by adding the phosphorous acid ester or adding the polyamide and the phosphorous acid ester, compatibility between the PPE and the polyamide can be further improved to accomplish the present invention.

The present invention relates to a thermoplastic resin composition comprising:
(A) 10 to 90 % by weight of a polyphenylene ether,
(B) 90 to 10 % by weight of a polyamide,
(C) 0.1 to 10 parts by weight of a phosphorous acid ester represented by the following formula (I) or (II) based on 100 parts by weight of the components (A) and (B) in total:

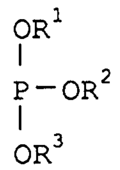

(I)

wherein $R^1$, $R^2$ and $R^3$ each represent a hydrogen atom, a substituted or unsubstituted aliphatic hydrocarbon group having 1 to 24 carbon atoms, or a substituted or unsubstituted aryl group, provided that at least two of $R^1$, $R^2$ and $R^3$ are a group other than the hydrogen atom,

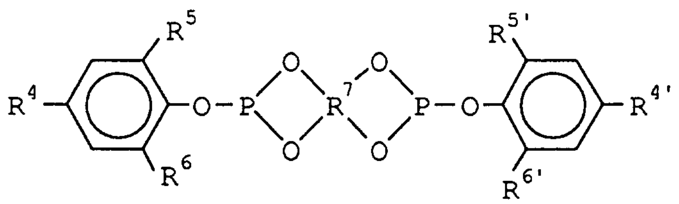

(II)

wherein $R^4$, $R^{4'}$, $R^5$, $R^{5'}$, $R^6$ and $R^{6'}$, each represent a hydrogen atom or an aliphatic hydrocarbon group having 1 to 20 carbon atoms, provided that all of $R^4$, $R^{4'}$,$R^5$, $R^{5'}$, $R^6$, and $R^{6'}$ are not a tertiary alkyl group at the same time, $R^7$ represents an alkanetetrayl group having 4 to 18 carbon atoms, and
(D) 0 to 100 parts by weight of an impact modifier based on 100 parts by weight of components (A) and (B) in total.

The present invention also relates to a process for preparing the thermoplastic resin composition comprising the above Components (A), (B), (C) and (D), which comprises the steps of preliminarily melting and kneading Components (A), (B) and (D), or Components (A) and (D); then, adding Component (C), or Components (B) and (C), and further melting and kneading the mixture.

DESCRIPTION OF THE PREFERRED EMBODIMENTS

In the following, the present invention is explained in detail.

⟨PPE (A)⟩

PPE of component (A) is a homopolymer or a copolymer having a structural unit represented by the formula:

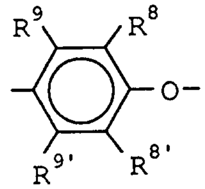

(III)

wherein $R^8$ and $R^{8'}$ may be same or different from each other, and each represent a halogen atom, a primary or secondary alkyl group, an aryl group, an aminoalkyl group, a halohydrocarbon group, or, a hydrocarbon oxy group or a halohydrocarbon oxy group; $R^9$ and $R^{9'}$ may be same or different from each other and each represent a hydrogen atom a halogen atom, a primary or secondary alkyl group, an aryl

group, a haloalkyl group, or, a hydrocarbon oxy group or a halohydrocarbon oxy group.

Suitable examples of the primary alkyl groups as $R^8$, $R^{8'}$, $R^9$ and $R^{9'}$ may include methyl, ethyl, n-propyl, n-butyl, n-amyl, isoamyl, 2-methylbutyl, 2,3-dimethylbutyl, 2-, 3- or 4-methylpentyl and heptyl. Suitable examples of the secondary alkyl groups may include isopropyl, sec-butyl or 1-ethylpropyl. In many cases, $R^8$ and $R^{8'}$ are each an alkyl group or a phenyl group, particularly an alkyl group having 1 to 4 carbon atoms; and $R^9$ and $R^{9'}$ are each a hydrogen atom.

A specific example of the PPE (A) may include, for example, poly(2,6-dimethyl-1,4-phenylene ether), poly(2,6-diethyl-1,4-phenylene ether), poly(2,6-dipropyl-1,4-phenylene ether), poly(2-ethyl-6-methyl-1,4-phenylene ether),poly(2-methyl-6-propyl-1,4-phenylene ether), 2,6-dimethylphenol/2,3,6-trimethylphenol copolymer, 2,6-dimethylphenol/2,3,6-trimethylphenol copolymer, 2,6-diethylphenol/2,3,6-trimethylphenol copolymer, 2,6-dipropylphenol/2,3,6-trimethylphenol copolymer, a graft copolymer of poly(2,6-dimethyl-1,4-phenylene ether) with styrene, and a graft copolymer of 2,6-dimethylphenol/2,3,6-trimethylphenol copolymer with styrene.

A suitable homopolymer of the PPE (A) may include, for example, poly(2,6-dimethyl-1,4-phenylene ether). A suitable copolymer may include a random copolymer of 2,6-dimethylphenol and 2,3,6-trimethylphenol.

As to the molecular weight of the PPE (A), it is desirably an intrinsic viscosity measured in chloroform at 30 °C of usually 0.2 to 0.8 dl/g. Such a PPE (A) has a number average polymerization degree of 25 to 400.

The PPE is usually prepared by an oxidative coupling reaction of a phenol compound. As for the oxidative coupling polymerization for preparing the PPE, a number of catalytic systems have been known. Selection of the catalyst is not particularly limited, and any of known catalysts can be used. The catalyst usually comprises at least one compounds of a heavy metal such as copper, manganese and cobalt usually in combination with various other substances (for example, as disclosed in U.S. Patents No. 4,042,056, No. 3,306,874, No. 3,306,875, No. 3,365,422, No. 3,639,656, No. 3,642,699, No. 3,733,299, No. 3,838,102, No. 3,661,848 and No. 5,037,943).

As the PPE (A) to be used in the present invention, a unmodified PPE can be used singly, or a small amount of known functionalizing agent can be added for modification in such a range that the gist of the present invention is not impaired. Also, a mixture of unmodified PPE and a known modified PPE can be used in combination in such a range that the gist of the present invention is not impaired. As an example of the modified PPE, there may be mentioned an epoxy group-modified PPE (Japanese Provisional Patent Publication No. 257957/1987 and Japanese PCT Provisional Patent Publication No. 503388/1988), an amide group- or imide group-modified PPE (Japanese PCT Provisional Patent Publication No. 500803/1988), an alkoxysilyl group-modified PPE (Japanese PCT Provisional Patent Publication No. 503392/1988), a carboxyl group- or carboxylic anhydride-modified PPE (Japanese Provisional Patent Publication No. 26913/1981, Japanese PCT Provisional Patent Publication No. 500456/1987, Japanese Provisional Patent Publications No. 10656/1988 and No. 54427/1988), and a hydroxyl group-modified PPE (Japanese Provisional Patent Publication No. 250025/1991)

⟨Polyamide (B)⟩

As the polyamide of component (B), there can be mentioned a polyamide resulting from polycondensation of an aliphatic, alicyclic or aromatic diamine such as hexamethylenediamine, decamethylenediamine, dodecamethylenediamine, 2,2,4- or 2,4,4-trimethylhexamethylenediamine, 1,3- or 1,4-bis(aminomethyl)-cyclohexane,bis(p-aminocyclohexyl)methane, and m-or p-xylylenediamine, with a dicarboxylic acid or a derivative thereof such as adipic acid, suberic acid, sebacic acid, cyclohexanedicarboxylic acid and terephthalic acid; a polyamide obtained from a lactam such as $\epsilon$-caprolactam and $\omega$-laurolactam; a polyamide resulting from polycondensation of $\omega$-aminocaproic acid or 11-aminoundecanoic acid; and a mixture of the above polyamides.

More specifically, there may be mentioned polycaproamide, polyhexamethyleneadipamide, polyhexamethylenesebacamide, polydodecanamide, or a copolymerized polyamide containing these as a main component. Among them, polycaproamide (nylon 6) and polyhexamethyleneadipamide (nylon 66) which are excellent in melting point, rigidity and molding property are preferable. The molecular weight is not specifically limited, and a polyamide having a relative viscosity of 2 to 5 (measured according to JIS K 6810) is generally used. If necessary, an elastomer-reinforced polyamide known as a tough nylon may be used. Also, a polyamide containing various fibers such as a glass fiber, and various inorganic fillers such as talc may be used.

⟨Phosphorous acid ester (C)⟩

The phosphorous acid ester of component (C) is a compound of the following (1) or (2).

(1) Monophosphite

As a monophosphite, a phosphorous acid diester or a phosphorous acid triester represented by the formula (I) is used.

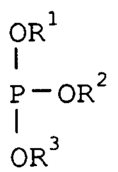

(I)

wherein $R^1$, $R^2$ and $R^3$ have the same meanings as defined above.

As an example of $R^1$, $R^2$, and $R^3$ except for a hydrogen atom of the above formula (I), there may be mentioned a substituted or unsubstituted aliphatic hydrocarbon group having 1 to 20 carbon atoms, preferably 3 to 12 carbon atoms; and a substituted or unsubstituted aryl group.

As a specific example of $R^1$, $R^2$ and $R^3$ except for a hydrogen atom, there may be mentioned a substituted or unsubstituted aliphatic hydrocarbon group such as t-butyl, n-butyl, isopropyl, hexyl, pentyl, neopentyl, decyl, isodecyl, dodecyl and butoxyethyl; and a substituted or unsubstituted aryl group such as phenyl, 2,4-di-tert-butylphenyl, 4-nonylphenyl, octylphenyl and 2,6-di-tert-butyl-4-methyl-phenyl.

As a specific example of the monophosphite, there may be mentioned a phosphorous acid diester such as diisodecyl phosphite and diphenyl phosphite; a phosphorous acid trialkyl ester such as triethyl phosphite, tributyl phosphite, trioctyl phosphite, triisooctyl phosphite, tridecyl phosphite, triisodecyl phosphite, trilauryl phosphite and tristearyl phosphite; a phosphorous acid triaryl ester such as triphenyl phosphite, tris(nonylphenyl) phosphite, tris(2,4-tert-butylphenyl) phosphite, tris(2,4-dinonylphenyl) phosphite, tris(biphenyl) phosphite and bis(nonylphenyl)phenyl phosphite; and a phosphorous acid alkylaryl ester such as diisooctylphenyl phosphite, diisodecylphenyl phosphite, dilaurylphenyl phosphite, di(tridecyl)phenyl phosphite, octyldiphenyl phosphite, isooctyldiphenyl phosphite, isodecyldiphenyl phosphite, and tridecyldiphenyl phosphite; and among them, triphenyl phosphite, tris(nonylphenyl) phosphite and tridecyl phosphite are preferred.

(2) Diphosphite

As a diphosphite, a phosphorous acid ester represented by the formula (II) is used.

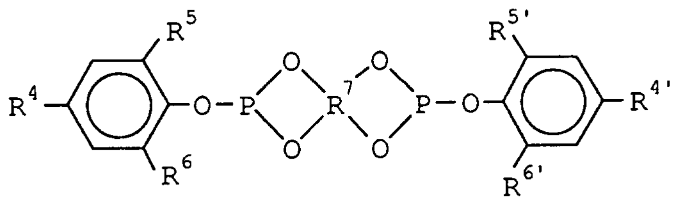

(II)

wherein $R^4$, $R^{4'}$, $R^5$, $R^{5'}$, $R^6$ and $R^{6'}$ have the same meanings as above.

As an example of $R^4$, $R^{4'}$, $R^5$, $R^{5'}$, $R^6$ and $R^{6'}$ of the above formula (II) except a hydrogen atom, there may be mentioned an aliphatic hydrocarbon group having 1 to 20 carbon atoms, preferably 1 to 10 carbon atoms, provided that the case where all of $R^4$, $R^{4'}$, $R^5$, $R^{5'}$, $R^6$ and $R^{6'}$ are tertiary alkyl groups at the same time is excluded. As an example of $R^7$, there may be mentioned an alkanetetrayl group having 4 to 18 carbon atoms, preferably 5 to 10 carbon atoms.

As a specific example of the aliphatic hydrocarbon group of $R^4$, $R^{4'}$, $R^5$, $R^{5'}$, $R^6$ and $R^{6'}$, there may be mentioned an alkyl group such as methyl, ethyl, propyl, butyl, tert-butyl, pentyl, neopentyl and nonyl, and as a specific example of $R^7$, there may be mentioned an alkanetetrayl group such as neopentanetetrayl.

As a specific example of the diphosphite, there may be mentioned diphenylpentaerythritol diphosphite, bis(2-methylphenyl)pentaerythritol diphosphite, bis(3-methylphenyl)pentaerythritol diphosphite, bis(4-methylphenyl)-pentaerythritol diphosphite, bis(2,4-dimethylphenyl)pentaerythritol diphosphite, bis(2,6-dimethylphenyl)pentaerythritol diphosphite, bis(2,3,6-trimethylphenyl)pentaerythritol diphosphite, bis(2-tert-butylphenyl)pentaerythritol diphosphite, bis(3-tert-butylphenyl)pentaerythritol diphosphite, bis(4-tert-butylphenyl)-pentaerythritol diphosphite, bis(2,4-di-tert-butylphenyl)pentaerythritol diphosphite, bis(2,6-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, bis(nonylphenyl)pentaerythritol diphosphite and (2,6-di-tert-butyl-4-methylphenyl) (2,4-di-tert-butylphenyl)pentaerythritol diphosphite; and preferably bis-(nonylphenyl)pentaerythritol diphosphite, bis(2,4-di-tert-butylphenyl) pentaerythritol diphosphite and bis-(2,6-di-tert-butyl-4-methylphenyl)pentaerythritol diphosphite.

The above monophosphite and diphosphite may be used singly or in a combination with two or more.

⟨Impact modifier (D)⟩

As the impact modifier of component (D), a natural or artificially polymerized rubber-like substance may be used.

As a concrete example, there may be mentioned, for example, a natural rubber, a butadiene polymer, a styrene-butadiene copolymer or a hydrogenated material thereof, a styrene-isoprene copolymer or a hydrogenated material thereof (including, e.g., a random copolymer, a block copolymer and a graft copolymer), an isoprene polymer, an isobutylene polymer, a chlorobutadiene polymer, a butadiene-acrylonitrile copolymer, an isobutylene-butadiene copolymer, an isobutylene-isoprene copolymer, an acrylic acid ester and/or a methacrylic acid ester copolymer, an ethylene-propylene copolymer, an ethylene-propylene-diene copolymer, an $\alpha,\beta$-unsaturated dicarboxylic acid anhydride-modified material of the above materials, a glycidyl ester or an unsaturated glycidyl ether-modified material of the same, a copolymer comprising an unsaturated epoxy compound and ethylene, a terpolymer comprising an unsaturated epoxy compound, ethylene and an ethylenic unsaturated compound, a copolymer comprising an $\alpha,\beta$-unsaturated epoxy compound and styrene, a copolymer comprising an $\alpha,\beta$-unsaturated carboxylic acid anhydride and styrene, a thiocol rubber, a polysulfide rubber, a polyurethane rubber, a polyether rubber and an epichlorohydrin rubber.

A process for preparing these rubber-like materials is not particularly limited. Any kind of copolymers such as a random copolymer, a block copolymer and a graft copolymer may be used as the impact modifier of the present invention.

As the preferred impact modifier, there may be mentioned a styrene-butadiene copolymer, an ethylene-propylene copolymer, an acrylic acid ester and/or methacrylic acid ester copolymer, a styrene-butadiene block copolymer and a hydrogenated styrene-butadiene block copolymer.

⟨Formulation ratio of Components⟩

A formulation ratio of PPE (A) and polyamide (B) included in the composition of the present invention is mentioned below. The formulation ratio of Component (A) based on the total amount of Components (A) and (B) is preferably 10 to 90 % by weight, more preferably 20 to 80 % by weight, most preferably 30 to 70 % by weight. If the amount of Component (A) is less than 10 % by weight, only a slight improving effect on the heat-resistant rigidity can be obtained. If it exceeds 90 % by weight, the solvent resistance is undesirably lowered.

The formulation ratio of Component (B) is preferably 90 to 10 % by weight, more preferably 80 to 20 % by weight, most preferably 70 to 30 % by weight based on the total amount of Components (A) and (B). If the amount of Component (B) is less than 10 % by weight, only a slight improving effect on the solvent resistance can be obtained. To the contrary, when it exceeds 90 % by weight, the heat resistant rigidity is undesirably lowered.

The phosphorous acid ester of Component (C) is included in the composition within the range of 0.1 to 10 parts by weight, preferably 0.2 to 6 parts by weight, more preferably 0.2 to 5 parts by weight based on 100 parts by weight of Components (A) and (B) in total. If the amount is less than 0.1 part by weight, sufficient improving effects on the mechanical strength cannot be obtained, while if it exceeds 10 parts by weight, increase in viscosity of the polyamide and reactions such as cross-linking occur more than required, and physical properties of the molded product may be lowered or appearance thereof may be worsened.

The impact modifier of Component (D) is included in the composition in an amount of 0 to 100 parts by weight, preferably 0 to 50 parts by weight, particularly effectively 5 to 50 parts by weight based on 100

parts by weight of Components (A) and (B) in total. If the amount is less than 1 part by weight, no improving effect on the impact resistance is observed, while if it exceeds 100 parts by weight, the rigidity or the heat resistance is undesirably lowered.

〈Additional Components〉

In the thermoplastic resin composition of the present invention, components other than the above Components (A), (B), (C) and (D) may be added. For example, 0.05 to 5 % by weight of a scavenger of an acidic substance, an antioxidant, a weatherability improving agent or a metallic soap; 5 to 30 % by weight of a plasticizer or a fluidity improving agent; 0.5 to 2 % by weight of a nucleating agent; and 3 to 15 % by weight of a flame-retardant may be used as an additive component(s). Also, it is effective for improving rigidity, heat-resistance and dimensional accuracy to add 10 to 45 % by weight of an organic filler, an inorganic filler or a reinforcing agent, particularly a glass fiber, mica, talc, wallastonite, potassium titanate, calcium carbonate or silica. Furthermore, 0.5 to 5 % by weight of a coloring agent and a dispersant thereof may be formulated.

In addition, 5 to 70 % by weight of a polystyrene, a polycarbonate, an ABS, a polyphenylenesulfide or a polyester may be formulated in the resin composition.

〈Preparation process of the thermoplastic resin composition and molding method of the same〉

In order to obtain the thermoplastic resin composition of the present invention, a process for melting and kneading which has generally been put to practical use for thermoplastic resins is applicable. For example, each component which is in the form of powder, particle or liquid is uniformly mixed, when required, together with an additive listed in the column of the additional components, by using a Henschel mixer, a ribbon blender or a V type blender, followed by kneading by using a monoaxial or polyaxial kneading-extruder, a roll mixer, a Banbury mixer, a Laboplastomill (Brabender), and further, a high viscosity-reactor, more specifically, a transverse type biaxial stirrer or a vertical type stirrer.

As for the order of kneading, the PPE (A), the polyamide (B) and the impact modifier (D); or the PPE (A) and the impact modifier (D) are melted and kneaded as a preliminary kneading to form a preliminary mixture, then the phosphorous acid ester (C) is added, or the polyamide (B) and the phosphorous acid ester (C) are added as a post kneading to form a mixture containing all of the necessary Components. In the preliminary kneading, the kneading time can be voluntarily selected from the range of 0.1 to 20 minutes. If the kneading time is less than 0.1 minute, the impact modifier cannot be sufficiently dispersed in the PPE, while if it exceeds 20 minutes, the resulting resin is notably degraded. The kneading temperature may be optionally selected from the range of 200 to 400 °C. In the post kneading, the kneading time can be voluntarily selected from the range of 0.1 to 20 minutes. If the kneading time is less than 0.1 minute, a chain-elongation reaction of the polyamide by the phosphorous acid ester cannot be sufficiently caused, while if it exceeds 20 minutes, a chain elongation or cross-linking reaction is caused more than required, failing to have a polyamide having a proper molecular weight, and therefore, the fine dispersion or improvement in the physical properties cannot be expected. The kneading temperature may be optionally selected from the range of 200 to 400 °C. If the kneading temperature is out of the above range, the phosphorous acid ester cannot cause the polyamide to react sufficiently, and therefore, the fine dispersion or improvement in the physical properties cannot be expected.

As for the kneading time, the total time of the preliminary kneading and the post kneading times is preferably in the range of 0.2 to 20 minutes. The kneading temperature is more preferably in the range of 240 to 290 °C.

As for the order of the kneading, the above preliminary kneading and the post kneading can be carried out by using a part of the final composition, followed by dilution to have the composition of the present invention.

As above described, by controlling the dispersion conditions of the impact modifier and the reactions of the polyamide, remarkable minimization of a dispersed particle size and improvement in the physical properties can be attained without causing a graft reaction.

Although not specified by the theoretical backgrounds, appearance of the finely dispersed composition of the present invention having excellent mechanical strength could be considered to be obtained by that the impact modifier which is previously dispersed in the PPE by the preliminary kneading is further finely dispersed in micron order in the PPE by the post kneading after addition of the phosphorous acid ester. Namely, it is presumed that a catalytic effect of the phosphorous acid ester causes an increase in the molecular weight of the polyamide, resulting in changes of a phase structure which has been already

established to stable one again, during which the impact modifier is finely dispersed in micron order in the PPE, whereby the mechanical strength thereof is improved, which may be caused by the presence of an optimum region which is the most suitable for the viscosity ratio of the polymers constituting the dispersion phase and the continuous phase, i.e., the PPE and the polyamide (see S. Wu, Polymer Engineering and Science, Vol. 27, p. 335 (1987)).

A molding method of the thermoplastic resin composition of the present invention is not particularly limited, but a molding method which has generally been used for thermoplastic resins such as injection molding, blow molding, extrusion molding and press molding may be applicable.

## EXAMPLES

### Examples 1 to 10 and Comparative Examples 1 to 5

Components used are as follows:

PPE: Poly(2,6-dimethyl-1,4-phenylene ether) (manufactured by Nippon Polyether Co., having an intrinsic viscosity of 0.31 dl/g measured at 30 °C in chloroform, referred to as "H-30" in the table) was used.

Modified PPE: 5 liters of toluene was added to 500 g of a PPE having an intrinsic viscosity of 0.41 dl/g, and the resulting mixture was completely dissolved by stirring at 100 °C under a nitrogen atmosphere. To the solution were added 75 g of sodium ethoxide as a catalyst and 500 ml of ethanol, and then, 250 g of glycidol was added dropwise to the mixture over 30 minutes. The mixture was stirred at 100 °C for 7 hours, and the resulting mixture was poured into 25 liters of methanol, and the resulting hydroxyalkylated PPE was precipitated. The precipitate was collected by filtration and washed twice with methanol, and dried under heating at 80 °C and reduced pressure to obtain the modified PPE.

The hydroxyalkylated PPE exhibited an IR absorption at 3,380 $cm^{-1}$ due to an hydroxyl group. Determination of the hydroxyl group in the phenyl group, as a terminal group, revealed that 90 % of the PPE was reacted.

The reaction rate of the terminal phenolic hydroxyl group of the PPE was calculated by determining the terminal phenolic hydroxyl group before and after the reaction, according to the method described in Journal of Applied Polymer Science: Applied Polymer Symposium, Vol. 34, pp. 103-117 (1978).

Polyamide: Polyamide 6 (manufactured by BASF Co., under the trade name of ULTRAMID KR4411, referred to as "PA-6" in the table), and polyamide 6,6 (manufactured by BASF Co., under the trade name of ULTRAMID A-3, referred to as "PA-6, 6" in the table) were used.

Maleic anhydride: A commercially available reagent grade of maleic anhydride was used.

A styrene-maleic anhydride copolymer (manufactured by Arco Polymer Co., under the trade name of DAILARK #232, referred to as "SMA" in the table) was used.

Phosphorous acid ester: 2 kinds of phosphorous acid ester, i.e., bis(2,6-di-tert-butyl-4-methylphenyl)-pentaerythritol diphosphite (manufactured by Asahi Denka, Co., under the trade name of MARK PEP-36, referred to as "PEP-36" in the table) and a commercially available reagent grade triphenylphosphite (referred to as "TPP" in the table) were used.

According to the composition ratio shown in Table 1, each component was kneaded in a block at 180 rpm at 250 °C (polyamide 6) or 280 °C (polyamide 6,6) for 10 minutes using a Laboplastomill kneader manufactured by Toyo Seiki Seisakusho Co., and ground to obtain a granule resin composition.

Thus obtained resin composition was subjected to injection molding at the temperature of 290 °C using CS183MMX Minimax Injection Molding machine manufactured by Custom Scientific Co., to give test strips, and the characteristics of the test strips of the resin composition were evaluated according to the methods shown below. Prior to the kneading and molding, the resin composition was dried under reduced pressure at 120 °C for 12 hours. Results are shown in Table 1.

(1) Impact resistance

A test strip having a length of 31.5 mm, a width of 6.2 mm and a thickness of 3.2 mm was subjected to injection molding and an Izod impact strength thereof without notch was determined by using CS-138TI Type Minimax Izod Impact Tester manufactured by Custom Scientific Co.

(2) Tensile strength

A test strip for tensile test having a parallel length of 7 mm and a diameter at a parallel site of 1.5 mm was subjected to injection molding, and a stress and an elongation at breakage thereof were determined by

carrying out a tensile test under the conditions of a tensile rate of 1 cm/minute using CS-183TE Type Tensile Tester manufactured by Custom Scientific Co.

(3) Dispersed particle size

A part of the molded resin composition was cut, and a component to be a dispersed phase was selectively extracted with chloroform (in case of the PPE component) or hexafluoroisopropanol (in case of the polyamide component) to observe the dispersed particle size of domain with a scanning electromicroscope (manufactured by Hitachi Co., Type S-2400), as a measure of fine dispersion attained by using a phosphorous acid ester.

As for Examples 2, 3 and 5, and Comparative examples 1, 2 and 3, the polyamide in the composition was extracted in order to examine whether a graft polymer is produced from the PPE and the polyamide or not. The extraction of the polyamide was carried out according to the following method. The composition comprising the PPE and the polyamide which had been previously weighed was dissolved in a mixed solution comprising chloroform and hexafluoroisopropanol in a volume ratio of 1 : 1 and then a cast film was formed therefrom. The film was extracted with hexafluoroisopropanol as a good solvent for the polyamide, re-precipitated with methanol from the extract, and recovered. The ratio of polyamide which was used for the graft reaction was determined from the recovered unreacted polyamide (referred to as "Graft-reacted PA ratio" in the table) Only the value for Comparative example 3 shows the presence of the graft polymer, and it was revealed that any graft reaction did not substantially occur in the other Examples nor Comparative examples.

Table 1

| Composition ratio (parts by weight) | Example | | | | | | | |
|---|---|---|---|---|---|---|---|---|
| | 1 | 2 | 3 | 4 | 5 | 6 | 7 | 8 |
| PA-6 | 50 | 50 | 50 | 50 | — | 30 | 70 | — |
| PA-6,6 | — | — | — | — | 50 | — | — | 50 |
| PPE (H-30) | 50 | 50 | 50 | 50 | 50 | 70 | 30 | 50 |
| Modified PPE | — | — | — | — | — | — | — | — |
| Maleic anhydride | — | — | — | — | — | — | — | 0.005 |
| SMA | — | — | — | — | — | — | — | — |
| PEP-36 | 0.5 | 1.0 | 2.0 | — | 0.5 | 1.0 | 1.0 | 0.5 |
| TPP | — | — | — | 1.0 | — | — | — | — |
| Evaluation results | | | | | | | | |
| Impact resistance ($kg \cdot cm/cm^2$) (without notch) | 32.0 | 38.4 | 31.6 | 45.9 | 41.9 | 31.0 | 49.5 | 42.9 |
| Tensile break strength ($kg/cm^2$) | 644 | 663 | 659 | 637 | 704 | 602 | 702 | 703 |
| Tensile elongation at break (%) | 170 | 150 | 93 | 63 | 74 | 33 | 250 | 75 |
| Dispersed particle size (μm) | 0.2 | 0.2 | 0.3 | 0.3 | 0.3 | 0.2 | 0.15 | 0.25 |
| Graft reacted-PA ratio (%) | — | 0 | 0 | — | 0 | — | — | — |
| Polyamide recovered rate (%) | — | >99 | >99 | — | >99 | — | — | — |

Table 1 (Contd)

| Composition ratio (parts by weight) | Example 9 | Example 10 | Comparative example 1 | Comparative example 2 | Comparative example 3 | Comparative example 4 | Comparative example 5 |
|---|---|---|---|---|---|---|---|
| (B) PA-6 | 50 | — | 50 | — | 50 | 30 | 70 |
| (B) PA-6,6 | — | 50 | — | 50 | — | — | — |
| (A) PPE (H-30) | 40 | 50 | 50 | 50 | 50 | 70 | 30 |
| (A) Modified PPE | 10 | — | — | — | — | — | — |
| Maleic anhydride | — | — | — | — | 1 | — | — |
| (D) SMA | — | 0.3 | — | — | — | — | — |
| (C) PEP-36 | 1.0 | 0.5 | — | — | — | — | — |
| (C) TPP | — | — | — | — | — | — | — |
| Evaluation results | | | | | | | |
| Impact resistance ($kg \cdot cm/cm^2$) (without notch) | 51.9 | 43.0 | 18.9 | 22.9 | 28.0 | 23.2 | 29.9 |
| Tensile break strength ($kg/cm^2$) | 652 | 700 | 484 | 592 | 621 | 537 | 575 |
| Tensile elongation at break (%) | 160 | 74 | 15 | 15 | 40 | 15 | 130 |
| Dispersed particle size (μm) | 0.3 | 0.3 | 1.1 | 0.9 | 0.45 | 0.4 | 0.3 |
| Graft reacted-PA ratio (%) | — | — | 0 | 0 | 11 | — | — |
| Polyamide recovered rate (%) | — | — | >99 | >99 | 89 | — | — |

Examples 11 to 22

The same components as in Examples 1 to 10 and Comparative examples 1 to 5 were used except for changing PPE, the polyamide and the impact modifier used therein to those shown below.

As PPE, poly(2,6-dimethyl-1,4-phenylene ether) (manufactured by Nippon Polyether Co., having an intrinsic viscosity of 0.41 dl/g measured at 30 °C in chloroform, referred to as "H-41" in the table) was used.

As the polyamide, polyamide 6 (manufactured by Kanebo Co., under the trade name of MC-112L, referred to as "PA-6" in the table) and polyamide 6,6 (manufactured by Kanebo, under the trade name of MC-300, referred to as "PA-6,6" in the table) were used.

As the impact modifier, a hydrogenated styrene-butadiene-styrene copolymer (manufactured by Shell Chemical, Co., under the trade name of KRATON G-1651, referred to as "SEBS" in the table) was used.

In Examples, the PPE, the polyamide and the impact modifier were kneaded as the preliminary kneading, the phosphorous acid ester was added to the preliminary kneaded material, and the mixture was further kneaded as the post kneading to have the composition of the present invention (the order of such a kneading is referred to as "Successive" in the table). In Examples 18 to 22, the composition was kneaded in a block for the time same as in Examples 11 to 17 (the order of such a kneading is referred to as "In bulk" in the table).

According to the composition ratio shown in Table 2, each component was kneaded at 180 rpm at 250 °C (in case of polyamide 6) or at 280 °C (in case of polyamide 6,6) for 5 minutes as the preliminary kneading and another 5 minutes as the post kneading, in total for 10 minutes, using a Laboplastomill kneading machine manufactured by Toyo Seiki Seisakusho Co., then ground to obtain granular resin composition.

Thus obtained resin composition was subjected to injection molding in the same manner as in Examples 1 to 10 to prepare test strips and the characteristics of the test strips of the resin composition were evaluated according to the methods below. Prior to the kneading and molding, the resin composition was dried in the same manner as in Examples 1 to 10. The results are shown in Table 2.

(1) Impact Resistance

A test strip having a length of 31.5 mm, a width of 6.2 mm and a thickness of 3.2 mm was subjected to injection molding and an Izod impact strength thereof with notch having an R value of the notch end of 0.25 mm and a depth of the notch of 1.2 mm at 23 °C was determined by using CS-138TI Type Minimax Izod Impact Tester manufactured by Custom Scientific Co.

(2) Tensile Strength

Tensile Strength was determined in the same manner as in Examples 1 to 10.

(3) Elasticity

A test strip having a length of 47 mm, a width of 5 mm and a thickness of 2 mm was subjected to injection molding, and temperature dependency of storage rigidity (E') was measured under conditions of frequency of 1 Hz by using an apparatus for measuring a viscoelasticity of solid (manufactured by Rheometrics Far East Co., RSAII, trade name) so as to determine the value of the storage rigidity (E') at 30 °C.

Table 2

| Composition ratio (parts by weight) | Example | | | | | | |
|---|---|---|---|---|---|---|---|
| | 11 | 12 | 13 | 14 | 15 | 16 | 17 |
| (A) PPE (H-41) | 50 | 50 | 50 | 50 | 50 | 30 | 70 |
| (B) PA-6 | 50 | 50 | 50 | — | — | 70 | 30 |
| (B) PA-6,6 | — | — | — | 50 | 50 | — | — |
| (C) PEP-36 | 1 | — | — | — | 1 | 1 | 1 |
| (C) TPP | — | 1 | 1 | 0.5 | — | — | — |
| (D) SEBS | 10 | 10 | 10 | 10 | 10 | 10 | 10 |
| Maleic anhydride | — | — | 0.005 | — | — | — | — |
| Order of kneading | Successive | Successive | Successive | Successive | Successive | Successive | Successive |
| Evaluation results | | | | | | | |
| Impact resistance ($kg \cdot cm/cm^2$) (with notch) | 27.3 | 18.2 | 21.7 | 21.4 | 17.6 | 15.5 | 4.3 |
| Tensile break strength ($kg/cm^2$) | 626 | 680 | 683 | 785 | 858 | 770 | 489 |
| Modulus of elasticity ($kg/cm^2$) | 17500 | 17000 | 17700 | 20000 | 19300 | 18400 | 18500 |

Table 2 (Contd)

| Composition ratio (parts by weight) | Example 18 | 19 | 20 | 21 | 22 |
|---|---|---|---|---|---|
| (A) PPE (H-41) | 50 | 50 | 50 | 30 | 70 |
| (B) PA-6 | 50 | 50 | — | 70 | 30 |
| (B) PA-6,6 | — | — | 50 | — | — |
| (C) PEP-36 | 1 | — | 1 | 1 | 1 |
| (C) TPP | — | 1 | — | — | — |
| (D) SEBS | 10 | 10 | 10 | 10 | 10 |
| Maleic anhydride | — | 0.005 | — | — | — |
| Order of kneading | In bulk | In bulk | In bulk | In bulk | In bulk |
| Evaluation results | | | | | |
| Impact resistance ($kg \cdot cm/cm^2$) (with notch) | 9.7 | 13.3 | 10.6 | 10.8 | 3.2 |
| Tensile break strength ($kg/cm^2$) | 491 | 613 | 707 | 690 | 418 |
| Modulus of elasticity ($kg/cm^2$) | 16800 | 16900 | 17400 | 17400 | 17500 |

The thermoplastic resin composition of the present invention is a composition in which a PPE, a polyamide and an impact modifier are finely dispersed substantially occurring no graft reaction, and provides an excellent molded product which has characteristics without impairing excellent characteristics of respective components originally have, and is well-balanced in heat-resistant rigidity and mechanical strength, and the process of the present invention provides a thermoplastic resin composition giving a molded product having more excellent properties.

## Claims

1. A thermoplastic resin composition which comprises
   (A) 10 to 90 % by weight of a polyphenylene ether,
   (B) 90 to 10 % by weight of a polyamide,
   (C) 0.1 to 10 parts by weight of a phosphorous acid ester represented by the following formula (I) or (II) based on 100 parts by weight of the components (A) and (B) in total:

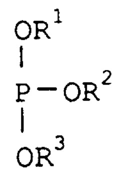

(I)

wherein $R^1$, $R^2$ and $R^3$ each represent a hydrogen atom, a substituted or unsubstituted aliphatic hydrocarbon group having 1 to 24 carbon atoms, or a substituted or unsubstituted aryl group, provided that at least two of $R^1$, $R^2$ and $R^3$ are a group other than the hydrogen atom,

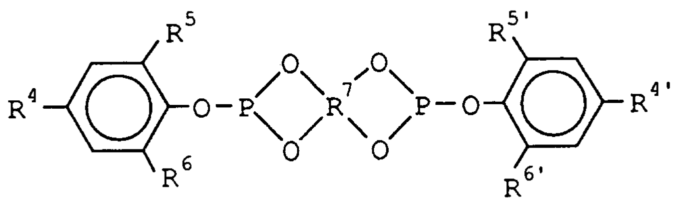

(II)

wherein $R^4$, $R^{4'}$, $R^5$, $R^{5'}$, $R^6$ and $R^{6'}$, each represent a hydrogen atom or an aliphatic hydrocarbon group having 1 to 20 carbon atoms, provided that all of $R^4$, $R^{4'}$,$R^5$, $R^{5'}$, $R^6$, and $R^{6'}$ are not a tertiary alkyl group at the same time, $R^7$ represents an alkanetetrayl group having 4 to 18 carbon atoms, and
   (D) 0 to 100 parts by weight of an impact modifier based on 100 parts by weight of components (A) and (B) in total.

2. The thermoplastic resin composition according to Claim 1, wherein the composition comprises
   (A) 20 to 80 % by weight of polyphenylene ether;
   (B) 80 to 20 % by weight of polyamide;
   (C) 0.2 to 6 parts by weight of phosphorous acid ester based on 100 parts by weight of component (A) and component (B) in total; and
   (D) 0 to 50 parts by weight of an impact modifier based on 100 parts by weight of components (A) and (B) in total.

3. The thermoplastic resin composition according to Claim 1 or 2, wherein the phosphorous acid ester (C) is the compound represented by the formula (II).

4. The thermoplastic resin composition according to any one of Claims 1 to 3, wherein the phosphorous acid ester (C) is at least one selected from the group consisting of bis(nonylphenyl)pentaerythritol diphosphite, bis(2,4-di-tert-butylphenyl) pentaerythritol diphosphite and bis (2,6-di-tert-butyl-4-methyl-phenyl) pentaerythritol diphosphite.

5. The thermoplastic resin composition according to any one of preceding Claims, wherein the impact modifier (D) is selected from the group consisting of a styrene-butadiene copolymer, an ethylene-propylene copolymer, an acrylic acid ester and/or methacrylic acid ester copolymer, a styrenebutadiene block copolymer and a hydrogenated styrenebutadiene block copolymer.

6. The thermoplastic resin composition according to Claim 1, wherein the composition comprises
   (A) 30 to 70 % by weight of polyphenylene ether;
   (B) 70 to 30 % by weight of polyamide;

(C) 0.2 to 5 parts by weight of at least one of bis(nonylphenyl)pentaerythritol diphosphite, bis(2,4-di-tert-butylphenyl)pentaerythritol diphosphite and bis(2,6-di-tert-butyl-4-methylphenyl) pentaerythritol diphosphite based on 100 parts by weight of component (A) and component (B) in total; and
(D) 5 to 20 parts by weight of at least one of a styrene-butadiene copolymer, an ethylene-propylene copolymer, an acrylic acid ester and/or methacrylic acid ester copolymer, a styrene-butadiene block copolymer and a hydrogenated styrene-butadiene block copolymer based on 100 parts by weight of components (A) and (B) in total.

**7.** A process for preparing the thermoplastic resin composition according to Claim 1, which comprises the steps of
(i) preliminarily melting and kneading Components (A), (B) and (D), or Components (A) and (D) to prepare a preliminary mixture;
(ii) adding Component (C), or Components (B) and (C) to the above preliminary mixture to prepare a mixture; and then,
(iii) melting and kneading the mixture.

**8.** A process for preparing the thermoplastic resin composition according to Claim 7, which comprises the steps of
(i) preliminarily melting and kneading Components (A), (B) and (D) to prepare a preliminary mixture;
(ii) adding Component (C) to the above preliminary mixture to prepare a mixture; and then,
(iii) melting and kneading the mixture.

**9.** A process for preparing the thermoplastic resin composition according to Claim 7, which comprises the steps of
(i) preliminarily melting and kneading Components (A) and (D) to prepare a preliminary mixture;
(ii) adding Components (B) and (C) to the above preliminary mixture to prepare a mixture; and then,
(iii) melting and kneading the mixture.

**10.** The process for preparing the thermoplastic resin composition according to any one of Claims 7 to 9, wherein the phosphorous acid ester (C) is a compound represented by the formula (II).

**11.** The process for preparing the thermoplastic resin composition according to any one of Claims 7 to 10, wherein the phosphorous acid ester (C) is at least one selected from a group consisting of bis-(nonylphenyl)pentaerythritol diphosphite, bis(2,4-di-tert-butylphenyl)pentaerythritol diphosphite and bis-(2,6-di-tert-butyl-4-methylphenyl)pentaerythritol diphosphite.

**12.** The process for preparing the thermoplastic resin composition according to any one of Claims 7 to 11, wherein the impact modifier (D) is at least one selected from the group consisting of a styrene-butadiene copolymer, an ethylene-propylene copolymer, an acrylic acid ester and/or methacrylic acid ester copolymer, a styrene-butadiene block copolymer and a hydrogenated styrene-butadiene block copolymer.